# EUROPEAN PATENT APPLICATION

(11) **EP 4 744 964 A1**
(43) Date of publication of application: **20.05.2026**
(21) Application number: 25215331.7
(22) Date of filing: 12.11.2025
(51) Int. Cl.: B60P 7/13, B60P 7/08

(54) **TRANSPORT DEVICE AS WELL AS A BLOCKING ARRANGEMENT THEREFOR**

(30) Priority: 15.11.2024 NL 2039089
(71) Applicant: SMA Group B.V., 5731 HR Mierlo (NL)
(72) Inventor: CAREY, Paul, Mierlo (NL); CRUICKSHANKS, Kurt Peter, Mierlo (NL)
(74) Representative: Jilderda, Anne Ayolt

(57) **Abstract**

A transport device comprises a frame (1) with a rolling chassis (2) on which is provided a loading floor (3) on which a load can be received. A roll-out stop which confines the load laterally inside the frame comprises at least one blocking arrangement (10) on a flank of the frame (1). The blocking arrangement comprises a blocking body (12) which is adjustable therein between a raised blocking position and a downward directed passage position. The blocking body (12) provides in the blocking position a stop surface (14) against which the load strikes in the lateral displacement, but allows this displacement out of the frame in the passage position. The blocking arrangement (10) comprises spring means, comprising at least one first spring (21), which urge the blocking body (12) to the blocking position under spring tension.

## Description

The present invention relates to a transport device, comprising a frame with a rolling chassis which provides for a loading floor on which a load can be received, and comprising a roll-out stop which confines the load laterally inside the frame, wherein the roll-out stop comprises at least one blocking arrangement on a flank of the frame, comprising a blocking body which is adjustable therein between a raised blocking position and a relatively flat passage position, wherein the blocking body provides in the blocking position a stop surface against which the load strikes in a lateral displacement and allows in the passage position a lateral displacement of the load into and out of the frame, wherein the blocking arrangement comprises spring means which urge the blocking body to the blocking position under spring tension, and wherein the blocking arrangement comprises a locking which fixes the blocking body in the passage position.

The device particularly relates here to a drawn cart as is usually applied in multiples as a moving train behind a tractive vehicle for air cargo and/or luggage handling at airports and the like. These are trailers, so-called dollies, whereby a load such as luggage and/or air cargo is transported and is loaded and/or unloaded at the desired location. The load often comprises here one or more so-called unit load devices (ULDs). This is an air freight pallet or container which is used to transport cargo in wide-body aircraft and some narrow-body aircraft. This enables highly standardized handling of the load using support means for goods handling adapted thereto.

In order to limit the effort required when loading and unloading, the loading floor of such a trailer is usually provided with a roller guide over which the load is laterally movable under reduced resistance and can be moved out of or into the frame of the trailer. This same reduced resistance during loading and unloading of the vehicle, at the point of departure and the destination, however creates a risk during transport of the dolly losing its load wholly or partially, for instance when taking a turn or on a bumpy ground surface. In order to avoid this, the loading floor of the dolly is preferably equipped with a roll-out stop which can be created beforehand in order to confine the load inside the device.

Such a roll-out stop is for instance known from the American patent applications US 2009/0230242 and US 2014/0369780. The rollout stop described therein comprises a blocking arrangement with a spring-loaded blocking body. The blocking body provides on a first side an inclining slope and allows a container to act thereon. During a movement of the container from this side the blocking body will compress due to the effect of the container and provide ample space for the cargo. From an opposite side the blocking body however provides a stop surface which blocks an opposite movement of the load and so prevents the cargo from rolling off inadvertently. For the purpose of unloading the cargo the known blocking arrangement can be brought manually into a passage position, in which the blocking body lies flat and the load can pass in both directions.

For the purpose of the passage position the known device comprises for this purpose a manually operated locking which fixes the blocking body in the lowered position until this position is released again, once again manually. Not only is this manual operation far from ideal from an ergonomic viewpoint, it may also be neglected, intentionally or unintentionally, to return the blocking arrangement to the blocking position once a cargo has been loaded. In this case an unsafe or at least undesirable situation could occur again.

The present invention has for its object, among others, to provide a transport device with a blocking arrangement which is more user-friendly and, for an adequate protection of the cargo, does not depend on, or hardly depends on, the attentiveness of the user.

In order to achieve the stated object a transport device of the type described in the preamble has for this purpose the feature according to the invention that the locking comprises a spring-loaded locking body which, in the passage position, snaps into a locking position in order to lock the blocking body in the passage position, and that the blocking arrangement comprises an unlocking which provides a stop which is touched by the load when the load passes and releases the locking of the locking body.

The rollout stop comprises one or more of such blocking arrangements on one or more flanks of the vehicle. The spring-loaded locking body of such a blocking arrangement will automatically snap into the locking position as soon as the blocking body is urged all the way down to the passage position. This latter can for instance be achieved using a foot, by stepping on the blocking body; the user need not bend down therefor. This ensures that the blocking arrangement will automatically end up in the passage position and the locking body fixes this situation. The cargo can now pass the blocking arrangement unimpeded, for instance in order to be unloaded.

The blocking arrangement also comprises an automatic unlocking with a stop which will be touched every time a load passes, and releases the locking. Aided by the spring tension of the spring means, the blocking arrangement now once again takes up its active starting situation. This automatic unlocking of the blocking arrangement is in each case brought about by displacing the load thereover. This is particularly the case when loading the transport device, wherein the load is shifted over the downward directed blocking body on the loading floor of the frame and releases the locking. The blocking body will thereby automatically take up its raised, locking situation with the stop surface directed toward the load, as soon as the load has passed beyond the blocking arrangement. All this provides for a likewise automatic locking of the load, which will thereby not be neglected.

The user need thereby no longer make sure that the blocking body always returns to the active blocking position and will secure the cargo on the loading floor. Before departure, the user will be able to see at a glance that all blocking bodies are in their raised situation. If desired, the blocking bodies can here be embodied in a signal colour, differing from an adjacent part of the frame, so as to be expressly highlighted.

In a preferred embodiment the transport device has here the feature according to the invention that the unlocking comprises an unlocking member which is able and configured to act on the locking when touched in order to lift the locking body from the locking position, wherein the stop is provided on the unlocking body. The blocking arrangement thus comprises an autonomous unlocking member which, when touched, is able and configured to act on the locking and release the locking by the locking body.

A particular embodiment of the transport device according to the invention is here characterized in that the unlocking member is adjustable pivotally round an unlocking shaft, that the unlocking member provides the stop on a first side of the unlocking shaft, and that the unlocking member comprises on a second side of the unlocking shaft an arm and acts therewith on the locking member, at least provides a part of a transmission to the locking member. In a practical embodiment the transport device according to the invention is here characterized in that the unlocking member is provided to the side of the blocking body.

In order to ensure that the unlocking will be touched when a load is displaced over the blocking body the transport device according to the invention has the feature in a further particular embodiment that the stop protrudes above a level of the loading floor. In order not to disrupt a movement of the cargo here, or hardly so, a preferred embodiment of the transport device has the feature that the stop is rounded in a direction of the displacement of the load. Owing to the rounding of the stop, a load can be removed from the device or slid onto it in a smooth movement.

Although the blocking arrangement can be embodied in various ways, a particular embodiment of the transport device has the feature according to the invention that the blocking body is suspended in the blocking arrangement for pivoting about an actuating shaft and pivots therearound between the blocking position and the passage position counter to a first spring of the spring means, that the blocking body strikes against a boundary in the blocking position, and that the first spring provides in the blocking position a spring tension which urges the blocking body against the boundary, wherein the first spring particularly comprises a torsion spring which is arranged between the blocking body and an adjacent part of the blocking arrangement for operating around the actuating shaft.

The boundary of the blocking body in the blocking position is embodied sufficiently robustly to withstand a lateral displacement of the load when it strikes against the stop surface. The raised stop surface thereby provides for a reliable locking of the load, while the spring means hold the blocking body in this situation. The spring means furthermore urge the blocking body against the boundary in the locking blocking position so that the blocking arrangement firmly maintains this situation, even on a rough, bumpy ground surface. The spring force of the first spring clamps the blocking body onto the boundary.

In a further embodiment the transport device is characterized according to the invention in that the spring means comprise at least one second spring which acts on the locking body and tensions during a displacement of the blocking body from the blocking position to the passage position. The second spring thus imparts an increasing bias to the locking body as the blocking body is urged downward, which ensures a reliable locking as soon as the locking body has the freedom to shoot into the locking. In a practical embodiment the transport device according to the invention is here characterized in that the at least one second spring comprises a spiral spring which is tensioned operatively between the locking body and an opposite part of the blocking arrangement.

The above described interaction between the blocking body and the locking body can be configured directly or indirectly in various ways. A particular embodiment of the transport device in this respect has the feature according to the invention that the blocking body and the locking body are in mutual contact at a contact surface, and that the blocking body urges the locking body counter to a spring tension of the second spring during the displacement of the blocking body from the blocking position to the passage position. In this embodiment there is direct contact between the blocking body and the locking body, which ensures that the second spring will tension increasingly.

The transport device according to the invention is here preferably characterized in that the contact surface has on the blocking body a gradual progression which gradually displaces the locking body further during the displacement of the blocking body. For this purpose the locking body is particularly arranged pivotally around a locking shaft. Owing to the gradual progression of the contact surface, the blocking body likewise pushes the locking body away gradually when the blocking body is urged downward in order to finally snap into the passage position, forced to do so by the tensioned second spring.

A further particular embodiment of the transport device according to the invention has the feature that the blocking body comprises a protrusion or shoulder which, in the passage position, snaps behind a protrusion or shoulder of the locking body in order to lock the blocking body. In the passage position the blocking body and the locking body thus snap into each other with the protrusion or shoulder provided thereon in order to lock the blocking arrangement in the passage position. Once unlocked, the locking body releases the blocking body again and the blocking body returns to the raised blocking position, supported therein by the spring means which will release tension wholly or partially in the path from the passage position to the blocking position.

A further preferred embodiment of the transport device is characterized according to the invention in that the loading floor comprises a guide, particularly a roller guide, which enhances a lateral displacement of the load at least partially out of the frame. The guide comprises here particularly a roller floor or other type of roller assembly which provides reduced resistance in a lateral displacement of the load in order to thereby facilitate loading and unloading of the transport device.

A particular embodiment of the transport device has the feature here that the loading floor is intended and configured to receive one or more ULD (unit load device) which is movable over the guide and is displaceable laterally into and out of the frame. Not only does such a ULD enhance a highly standardized goods handling of the load, this facilitating loading and unloading, a ULD also ensures effective co-action with the rollout stop owing to a fixed mutual positioning of the bottom of the ULD relative to the one or more blocking arrangements.

The present invention also relates to a blocking arrangement of the type as applied in one or more of the above described transport devices according to the invention, characterized here by an individual housing.

The invention will be further elucidated hereinbelow with reference to an exemplary embodiment and an accompanying drawing. In the drawing:
- Figure 1: shows an exemplary embodiment of a transport device according to the invention;
- Figure 2: shows an enlarged view of a blocking arrangement as applied in the transport device of figure 1, wherein the blocking arrangement is in an upward directed blocking position;
- Figure 3: shows a cross-sectional view of the blocking arrangement of figure 2 in the raised, active blocking position;
- Figure 4: shows a cross-sectional view of the blocking arrangement of figure 2 in a locked passage position;
- Figure 5: shows a cross-sectional view of the blocking arrangement of figure 2 in an unlocked passage position;
- Figure 6: shows a cross-sectional view of the blocking arrangement of figure 2 in the starting situation of figure 3;
- Figure 7: shows a side and partial cross-sectional view of the blocking arrangement of figure 2 in the downward directed passage position;
- Figure 8: shows a side and partial cross-sectional view of the unlocking of the blocking arrangement of figure 2 from the downward directed passage position of figure 7; and
- Figure 9: shows a side and partial cross-sectional view of the blocking arrangement of figure 7 in the unlocked, raised and locking blocking situation.

It is otherwise noted here that the figures are purely schematic and not always drawn to (the same) scale. Some dimensions in particular may be exaggerated to greater or lesser extent for the sake of clarity. Corresponding parts are designated in the figures with the same reference numeral.

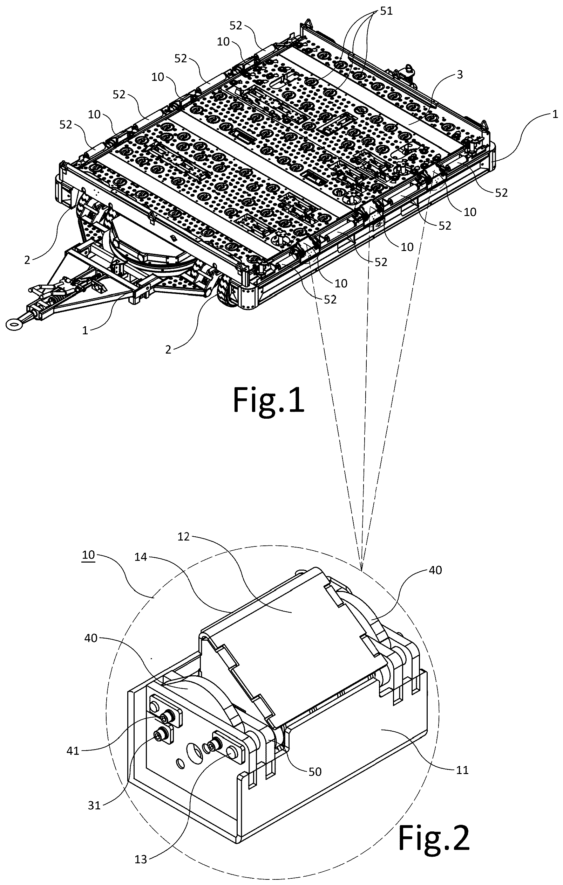

An exemplary embodiment of a transport device according to the invention is shown in figure 1. The transport device comprises a frame 1 with a rolling chassis 2, on which rests a substantially flat loading floor 3. In this case this is a drawn vehicle, a so-called dolly, as is usually used at airports for luggage handling and cargo. A number of such dollies is here usually coupled to each other and drawn by a tractive vehicle. The loading floor 3 is provided with a roller guide in the form of a system of freely rotating rollers 51 in the loading floor 3 and a set of guide rollers 52 on the flanks of chassis 2. This support provides a particularly low rolling resistance in order to facilitate a lateral displacement of the load to or from a position outside the frame 1 during loading and unloading.

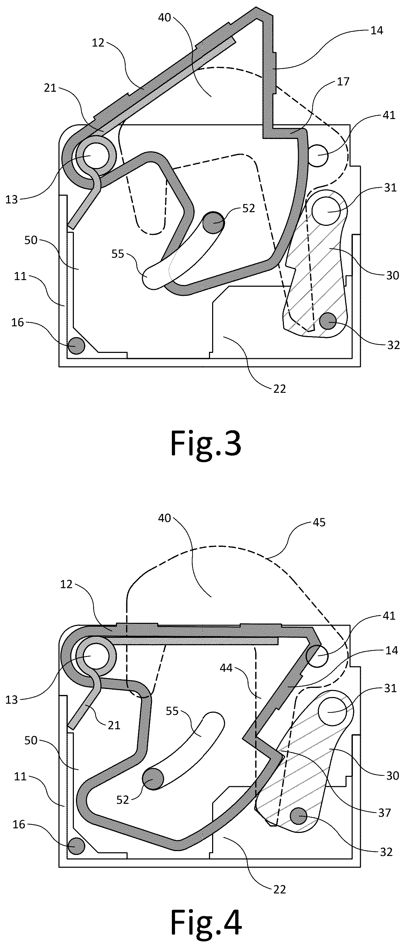

In order to secure a load carried by loading floor 3 onto the chassis, frame 1 comprises on each of the flanks at least one blocking arrangement 10, in this example three on each flank. One of these is shown enlarged and in more detail in figure 2. The blocking arrangement comprises an individual housing 11 in which a blocking body 12 is adjustably received. For this purpose the blocking body 12 is mounted inside the housing for pivoting about an actuating shaft 13. The blocking body is thereby adjustable between the raised blocking position, mainly outside housing 11, shown in figures 2, 3, 6 and 9 and a lying passage position, almost wholly inside the housing, as shown in figures 4, 5, 7 and 8. In the blocking position the blocking body 12 comprises a stop surface 14 against which the load will strike in the case of a lateral outward displacement in order to thus prevent the load from inadvertently exiting outside the frame. In the passage position a load can conversely be displaced unimpeded over the device in opposite directions.

Both the housing 11 and the blocking body 12, 14 are formed from thick-walled steel and are sufficiently strong and rigid to withstand this load. The blocking body 12, 14 particularly strikes with a protrusion 52 formed thereon against a boundary which is created by groove 55 in a steel partition 50 and which can withstand a full rearward tilting of the blocking body 12. The stop surface 14 typically has a height in the order of 5 to 15 centimetres and a width in the order of between 10 and 30 centimetres, with a steel thickness in the order of between 8 and 12 millimetres. In this example the stop surface is formed by a folded plate body 14 of this thickness, which is welded onto the underlying pivoting body 12. A rigid blockage for the load is thereby created. A first spring of spring means provided in the arrangement holds the arrangement in this position. In this example this is a torsion spring 21 which is tensioned around the actuating shaft 13 for operating between the blocking body and an opposite wall of the housing 11. The torsion spring 21 urges the blocking body 12, 14 into the raised blocking position and here clamps the protrusion 52 onto the boundary 55 in the partition 50.

In order to release the loading floor 3 for loading or unloading the blocking body 12 can be collapsed by manual or foot operation, wherein the blocking body 12 pivots about the actuating shaft 13 to a position inside housing 11. The blocking body 12 here takes up the downward directed passage position shown in figures 4, 5, 7 and 8. The blocking body 12 can here be brought into this lying position counter to the spring tension of the torsion spring 21 and is with a contact surface 15 in contact with a spring-loaded locking body 30, see also figure 4, on each of the two sides of the arrangement, which is mounted in the housing for pivoting around a locking shaft 31 and forms part of a locking. The contact surface 15 is rounded and forces the locking body 30 around the locking shaft 31 in counter-clockwise direction, as seen in the view of the drawing. A spiral spring 22 is here tensioned between the locking body 30 and a fixed part 16 of housing 11 until the blocking body 12 snaps with a shoulder 17 formed thereon behind a shoulder formed on the locking body 30. The spring tension of the spiral spring 22 pulls the two shoulders 17, 37 into each other, whereby the blocking body 12 is locked and held in this situation. The blocking body 12, 14 thus lies almost wholly inside the blocking arrangement 10, see figures 4, 5, 7 and 8.

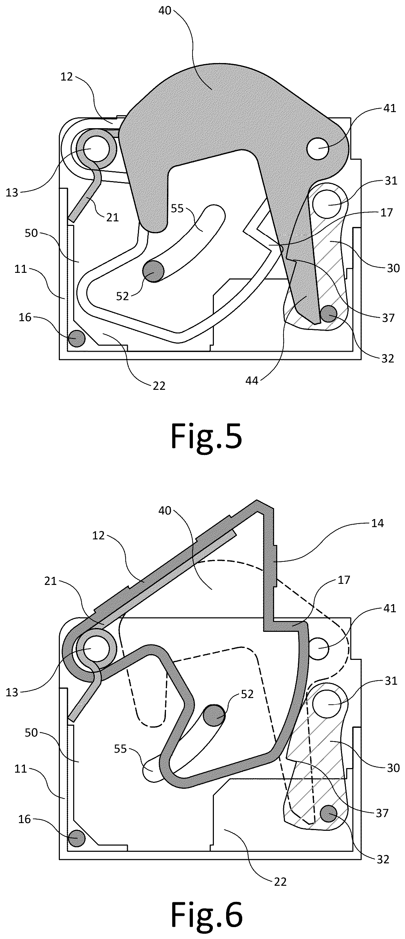

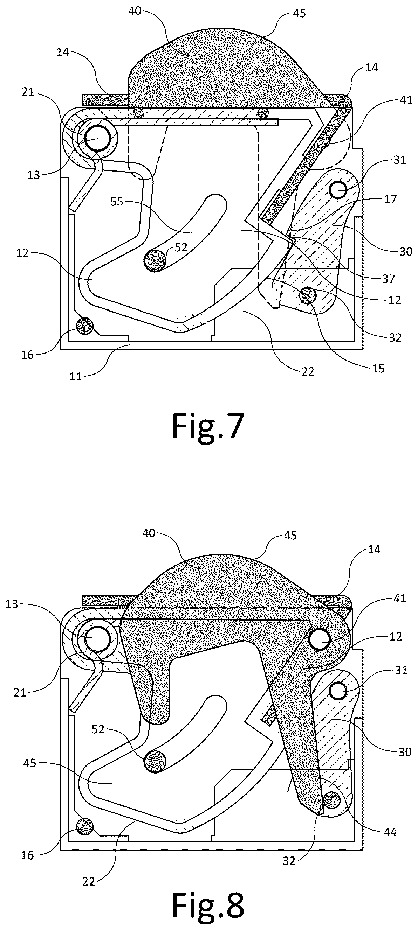

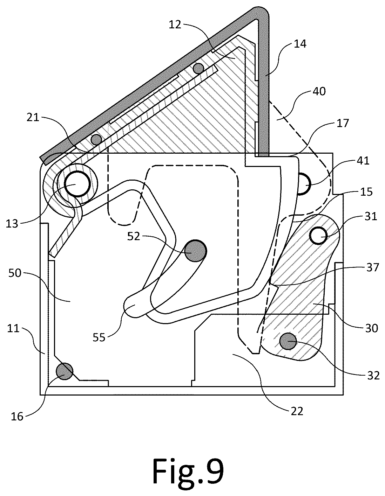

In order to depart this situation the blocking arrangement 10 provides an unlocking in the form of an unlocking member 40 on both sides of the blocking body 12, 14, which is here mounted in housing 11 for pivoting about an unlocking shaft 41. On one hand the unlocking members 40 provide on a first side of the unlocking shaft 41 a stop 45 against which a load will strike, and on the other hand an arm 44 on the opposite side of the unlocking shaft 41, which reaches into the locking 17, 37 in order to enter into co-action with protrusion 32 of the locking body 30, see figures 4 and 7. By exerting pressure on the stop 45 the unlocking member 40 pivots with the arm 44 against the protrusion 32 of locking body 30 in order to free the shoulder 37 of locking body 30 from the shoulder 17 of blocking body 12, see figures 5 and 8, and thus release the locking, see figure 3. The tightly tensioned torsion spring 21 now urges the blocking body 12 back to its raised, locking blocking position shown in figures 6 and 9. The protrusion 32 forms part here of a continuous rod through both locking bodies 30, which are thus mutually connected and move synchronously.

In the locked situation shown in figure 2 the unlocking member 40 undergoes this pressure on stop 45 particularly if the load is being displaced over the blocking arrangement 10. Because stop 45 protrudes above the level of the load, the load strikes against stop 45 which is now urged downward and brought into the situation shown in figures 5 and 8 owing to, among other factors, the rounded progression thereof. The locking of the blocking body 12, 14 is thus released automatically, i.e. without any specific targeted intervention by a worker, as soon as a load passes thereover and the blocking body 12 will spring to its locking situation when the load on loading floor 3 has been moved inside the frame 1, particularly if use is made for the load of a standard air freight pallet or container, usually referred to as ULD (Unit Load Device). This automatic locking contributes greatly to the safety and the convenience of use of the transport device shown in figure 1.

Although the invention has been further elucidated above with reference to only a single exemplary embodiment, it will be apparent that the invention is by no means limited thereto. On the contrary, many variations and embodiments are still possible within the scope of the invention for a person with ordinary skill in the art. Use was thus made in the exemplary embodiment of a drawn cart, a so-called dolly, although the invention, and particularly the blocking arrangement used therein, can also be used in a self-propelling vehicle with a loading floor on which a load can be received.

## Claims

1. Transport device comprising a frame (1) with a rolling chassis (2) which provides for a loading floor (3) on which a load can be received, and comprising a roll-out stop which confines the load laterally inside the frame, wherein the roll-out stop comprises at least one blocking arrangement (10) on a flank of the frame, comprising a blocking body (12) which is adjustable therein between a raised blocking position and a relatively flat passage position, wherein the blocking body provides in the blocking position a stop surface (14) against which the load strikes in a lateral displacement and allows in the passage position a lateral displacement of the load into and out of the frame, wherein the blocking arrangement comprises spring means (21) which urge the blocking body to the blocking position under spring tension, and wherein the blocking arrangement comprises a locking which fixes the blocking body (12) in the passage position, **characterized in that** the locking comprises a spring-loaded locking body (30) which, in the passage position, snaps into a locking position (17, 37) in order to lock the blocking body (12) in the passage position, and that the blocking arrangement comprises an unlocking (40, 45) with a stop (45) which is touched by the load when the load passes and releases the locking by the locking body (30).

2. Transport device according to claim 1, **characterized in that** the unlocking comprises an unlocking member (40) which is able and configured to act on the locking (17, 37) when touched in order to lift the locking body (30) from the locking position, wherein the stop (45) is provided on the unlocking body (40).

3. Transport device according to claim 2, **characterized in that** the unlocking member (40) is adjustable pivotally round an unlocking shaft (41), that the unlocking member (40) provides the stop (45) on a first side of the unlocking shaft (41), and that the unlocking member (40) comprises on a second side of the unlocking shaft (41) an arm (45) and acts therewith on the locking member (30), at least provides a part of a transmission to the locking member (30).

4. Transport device according to claim 2 or 3, **characterized in that** the unlocking member (40) is provided to the side of the blocking body (12).

5. Transport device according to one or more of the preceding claims, **characterized in that** the stop (45) protrudes above a level of the loading floor.

6. Transport device according to one or more of the preceding claims, **characterized in that** the stop (45) is rounded in a direction of the displacement of the load.

7. Transport device according to one or more of the preceding claims, **characterized in that** the blocking body (12) is suspended in the blocking arrangement for pivoting about an actuating shaft (13) and pivots therearound between the blocking position and the passage position counter to a first spring (21) of the spring means, that the blocking body strikes against a boundary (50) in the blocking position, and that the first spring (21) provides in the blocking position a spring tension which urges the blocking body (12) against the boundary, wherein the first spring particularly comprises a torsion spring which is arranged between the blocking body and an adjacent part of the blocking arrangement for operating around the actuating shaft (13).

8. Transport device according to one or more of the preceding claims, **characterized in that** the spring means comprise at least one second spring (22) which acts on the locking body (30) and tensions during a displacement of the blocking body (12) from the blocking position to the passage position.

9. Transport device according to claim 8, **characterized in that** the at least one second spring (22) comprises a spiral spring which is tensioned operatively between the locking body (30) and an opposite part of the blocking arrangement (10).

10. Transport device according to claim 8 or 9, **characterized in that** the blocking body (12) and the locking body (30) are in mutual contact at a contact surface (15), and that the blocking body (20) urges the locking body (30) counter to a spring tension of the second spring during the displacement of the blocking body from the blocking position to the passage position.

11. Transport device according to claim 10, **characterized in that** the contact surface has on the blocking body (12) a gradual progression which gradually displaces the locking body (30) further during the displacement of the blocking body (12).

12. Transport device according to one or more of the preceding claims, **characterized in that** the locking body is arranged pivotally about a locking shaft (31).

13. Transport device according to one or more of the preceding claims, **characterized in that** the blocking body (12) comprises a protrusion or shoulder (17) which, in the passage position, snaps behind a protrusion or shoulder (37) of the locking body (30) in order to lock the blocking body (12).

14. Transport device according to one or more of the preceding claims, **characterized in that** the loading floor comprises a guide (51), particularly a roller guide, which enhances a lateral displacement of the load at least partially out of the frame (1).

15. Transport device according to one or more of the preceding claims, **characterized in that** the loading floor is intended and configured to receive one or more ULD (unit load device) which is movable over the guide and is displaceable laterally into and out of the frame.

16. Blocking arrangement (10) of the type as applied in the transport device according to one or more of the preceding claims, **characterized by** an individual housing.
